# EUROPÄISCHE PATENTSCHRIFT

(11) **EP 1 483 546 B1**
(45) Veröffentlichungstag und Bekanntmachung des Hinweises auf die Patenterteilung: **09.03.2011**
(21) Anmeldenummer: 02792646.8
(22) Anmeldetag: 07.12.2002
(51) Int. Cl.: G01B 5/18, B60R 11/04

(54) **VERFAHREN UND VORRICHTUNG ZUR BEFESTIGUNG EINES SENSORS**
METHOD AND DEVICE FOR FASTENING A SENSOR
PROCEDE ET DISPOSITIF DE FIXATION D'UN CAPTEUR

(30) Priorität: 05.03.2002 DE 10209616
(43) Veröffentlichungstag der Anmeldung: 08.12.2004
(73) Patentinhaber: ROBERT BOSCH GMBH, 70442 Stuttgart (DE)
(72) Erfinder: KURFISS, Frank, 75417 Muehlacker (DE); SEGER, Ulrich, 71106 Magstadt (DE); APEL, Uwe, 72666 Neckartailfingen (DE); SKUPPIN, Andre, 71701 Schwieberdingen (DE)
(86) Internationale Anmeldenummer: PCT/DE2002/004496
(87) Internationale Veröffentlichungsnummer: WO 2003/074964

(56) Entgegenhaltungen:
- WO-A-03/074333
- DE-A- 10 010 434
- DE-A- 10 010 434
- DE-A- 19 902 922
- DE-A- 19 902 922
- DE-A1- 19 838 881
- US-A- 4 930 226
- US-A- 4 930 226

## Beschreibung

### Stand der Technik

Die Erfindung betrifft eine Vorrichtung zur Befestigung eines Bild, Sensors an einer Scheibe eines Kraftfahrzeugs.

Bei vielen Sensoren, insbesondere im Bereich der Kraftfahrzeugtechnik, ist die genaue Ausrichtung des Sensors bei seiner Montage von entscheidender Bedeutung, da von der Genauigkeit der Montage wesentlich die Funktionsfähigkeit des Sensorsystems sowie die Genauigkeit der durch den Sensor vorgenommenen Messung abhängt. Dies gilt auch für Bildsensorsysteme im Kraftfahrzeug, insbesondere von Stereokamerasystemen, aus deren Bildfolgen verschiedene Informationen über die Umgebung des Fahrzeugs gewonnen werden, insbesondere bei bekannter Lage der einzelnen Bildsensoren zueinander der Abstand zu vorausfahrenden Fahrzeugen oder anderen Objekten. Die Meßgenauigkeit derartiger Sensorsysteme hängt in hohem Maße davon ab, dass die Sensoren bei ihrem Einbau die vorgeschriebene Ausrichtung konstant einhalten. Dabei sind in der Regel Halteelemente für den oder die Sensoren vorgesehen, die eine ausreichende mechanische Steifigkeit zur Sicherstellung der vorgegebenen Ausrichtung aufweisen. In Verbindung mit Bildsensorsystemen sind Halterungen vorgesehen, die an der Windschutzscheibe des Fahrzeugs, vorzugsweise mittels Klebetechnik, angebracht sind. Diese sind so gestaltet, dass sie gleichzeitig auch als optische Blende gegen Streulichteinfall eingesetzt werden. In einer Ausführung gleicht die Bauform dieser Halteelemente einem schräg angeschnittenen Kegel bzw. Trichter. Diese Halteelemente werden vor Einbau der Windschutzscheibe ins Fahrzeug an dieser montiert, die Kamera selbst erst nach Windschutzscheibe in das Halteelement eingefügt. Wesentlich für die Genauigkeit der Sensormessung ist daher die korrekte Ausrichtung des Halteelements relativ zum Fahrzeug.

Ein solches Halteelement zeigt in WO 99/ 43242 A1.

Aus der deutschen Offenlegungsschrift DE 199 02 922 A1 ist eine Sensorikanordnung bekannt, wobei zunächst eine Klebefolie auf eine Hältefläche eines Sensorträgers aufgeklebt wird und anschließend wird der Sensorträger über die beidseitig klebende Klebefolie an einer Fahrzeugscheibe angekiebt

Die US 4,930,226 offenbart eine Lehre zur Bestimmung einer genauen Position eines Sensors, der in einer Bohrung montiert ist.

Aus der deutschen Offenlegungsschrift DE 100 10 434 A1 ist eine Kameravorrichtung in einer dritten Bremswamleuchte in einem Kraftfahrzeug bekannt

Die deutsche Offenlegungsschrift DE 198 38 881 A1 offenbart einen optischen Sensor für Kraftfahrzeuge zur Erfassung einer Benetzung einer Oberfläche.

### Vorteile der Erfindung

Das nachfolgend beschriebene Erfindung hat den vorteil, dass durch die Verwendung einer Justierhilfe gemäß einer Ausführungsform bei der Montage des Halteelements für den Sensor eine genau, reproduzierbare Ausrichtung des Halteelements erfolgt, wobei beim nachfolgenden Einbau des Sensors in das Halteelement die gewünschte genaue Ausrichtung des Sensors gewährleistet ist.

In vorteilhafter Weise wird eine genaue laterale Positionierung relativ zur Windschutzscheibe bei Bildsensorsystemen für Kraftfahrzeuge erreicht, so dass ein seitlicher Versatz des Kamerablickfeldes und damit eine Teilabschattung des Kamerablickfeldes vermieden wird. Dadurch wird auch sichergestellt, dass die optischen Achsen der Bildsensormodule unter Optimierung der Überdeckung der beiden Kamerabildfelder für den jeweiligen Anwendungszweck (z.B. Objektabstandsensierung) ausgerichtet sind.

Besonders vorteilhaft ist das Verfahren für das Anbringen des Halteelements an der Windschutzscheibe eines Kraftfahrzeugs, die in dem relevanten Bereich relativ großen Krümmungsvariationen aufweist. Damit läßt sich das Halteelement und darüber mittelbar der Sensor selbst durch Dickschicht-klebtechnik an der Windschutzscheibe befestigen, wobei große Krümmungsvariationsbreiten tolerierbar sind. Dennoch wird ein dichter Abschluß und eine sichere Haftung der Klebestelle gewährleistet.

In vorteilhafter Weise wird als Justierhilfe eine Lehre verwendet, die den Abmaßen des Sensors entspricht und die bei der Montage des Halteelements mit diesem zusammenwirkt. Dadurch wird die gewünschte Ausrichtung bei der Montage des Halteelements erreicht. Dabei ist die Lehre mit Anpreßstiften versehen, die mit entsprechenden Marken im Halteelement zusammenwirken und die genaue Ausrichtung sicherstellen.

Erfindungsgemäß ist eine Anpreßplatte vorgesehen, welche auf die gesamten Kontaktfläche des Halteelements mit seiner Unterlage (Windschutzscheibe) mittels Anpreßstiften Anpresskräfte ausübt, wobei die Anpressstifte mit entsprechenden Marken des Halteelements zusammenwirken. Eine optimale Kraftverteilung und ein sicherer Klebeprozeß wird erreicht.

Vorteilhaft ist ferner, dass auch über die Lehre Anpresskräfte übertragbar sind.

In einer weiteren Variation die nicht erfindungsgemäß ist, das Halteelement zweigeteilt ausgelegt, wobei in einem ersten Schritt eine dünn ausgestaltete Ankoppelscheibe an die Windschutzscheibe geklebt wird, die eigentliche Streulichtblende mit der Aufnahme für die Bildsensormodule in einem zweiten Arbeitsschritt befestigt wird. Dies hat den Vorteil, dass die Ankoppelscheiben beim Scheibenhersteller an die Windschutzscheiben montiert werden können, ohne dass das Transportvolumen in der Anlieferung zum Fahrzeughersteller unnötig erhöht wird. In vorteilhafter Weise wird die Montage der Streulichtblende an die Ankoppelscheibe durch den Fahrzeughersteller, beispielsweise über eine sogenannte Snap-in-Verbindung, vorgenommen. Die Lehren sind dann entsprechend anzupassen.

Weitere Vorteile ergeben sich aus der nachfolgenden Beschreibung von Ausführungsbeispielen bzw. aus den abhängigen Patentansprüchen.

### Zeichnung

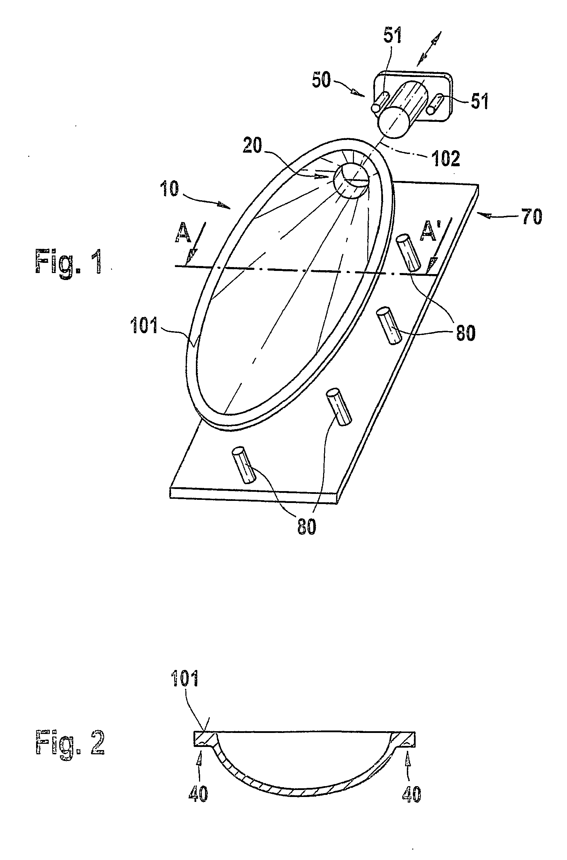

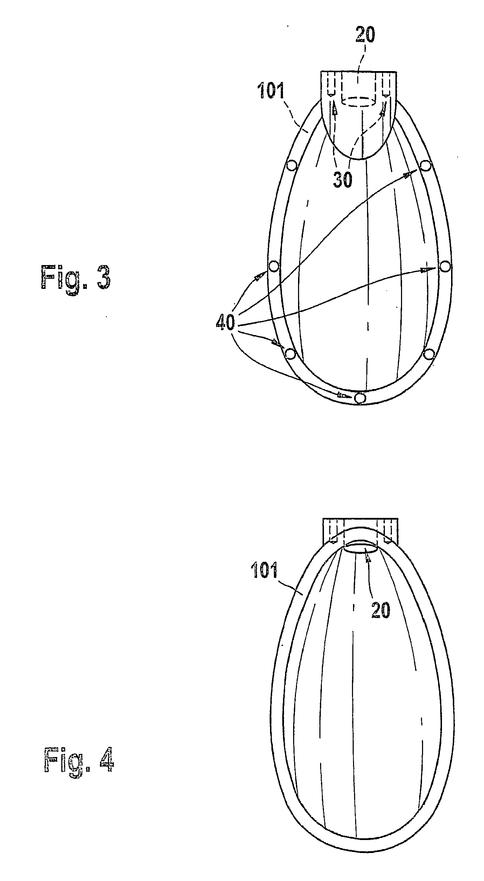

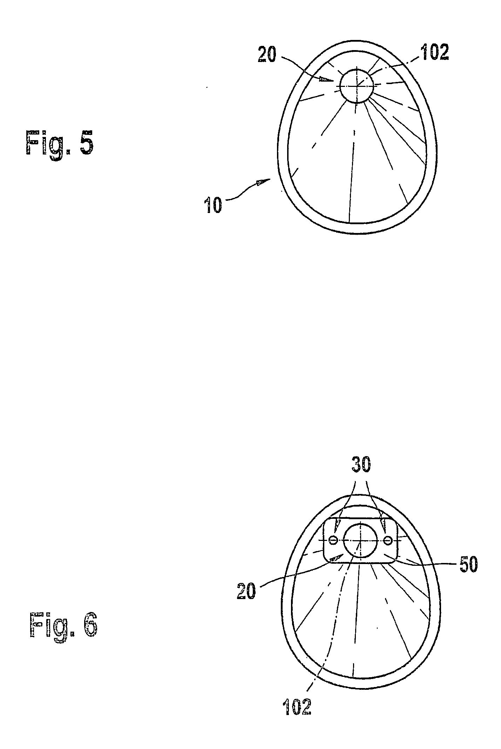

Die Erfindung wird nachstehend anhand der in der Zeichnung dargestellten Ausführungsformen näher erläutert. Figur 1 zeigt dabei ein Halteelement für einen Sensor, insbesondere ein Bildsensorsystem, samt Justierhilfe und Anpreßplatte, während in den Figuren 2 bis 6 verschiedene Schnitte durch das Halteelement dargestellt sind.

### Beschreibung von Ausführungsbeispielen

Figur 1 zeigt ein Beispiel für ein Bild Sensorhalteelement 10 (bei der Anwendung als Träger für ein Bildsensorsystem in Kraftfahrzeugen, welches mit der Windschutzscheibe des Fahrzeugs verbunden ist, Windschutzscheibenadapter genannt), welches eine Kontaktfläche 101 aufweist, über die das Halteelement 10 mit einer Unterlage (Windschutzscheibe) verbunden wird. Das Halteelement 10 weist eine Aufnahme 20 für den Sensor auf, welche in Figur 1 schematisch dargestellt ist. Ferner ist eine Anpreßplatte 70 mit Zentrierstiften 80 dargestellt, die nach Maßgabe der Geometrie der Kontaktfläche 101 des Halteelements 10 angeordnet sind. Diese Zentrierstifte treten beim Anpressen der Anpreßplatte 70 mit dem Halteelement in Wirkverbindung und sind so verteilt, dass auf die gesamte Kontaktfläche 101 Anpresskräfte übertragen werden, vorzugsweise eine im Wesentlichen gleiche Anpresskraft über der Kontaktfläche erreicht wird. Die Kontaktfläche 101 weist dabei Aufnahmen auf, die mit den Stiften 80 zusammenwirken.

Ferner ist eine Justierlehre 50 dargestellt, die die Abmessungen des Sensormoduls entspricht und die entlang der Achse 102 (im Falle eines Bildsensorssystems der optischen Achse) beweglich ist. Die Justierlehre 50 weist 51 Stifte auf, welche zur Justierung des Halteelements und in einer Ausführung zur Kraftübertragung dienen. Diese Stifte wirken beim Anbringen des Halteelements an seine Unterlage mit entsprechenden Aufnahmen des Halteelements zusammen. Sie sind im bevorzugten Anwendungsfall links und rechts neben der Sensornachbildung in einer die Achse 102 umfassenden Ebene angeordnet, vorzugsweise einer waagrechten Ebene.

Zur Justierung bei der Klebung des Halteelements auf seine Unterlage wird das mechanische Interface der Einbaupositionen des Sensormoduls ausgenutzt. Mit der geeignet gestalteten Lehre wird das Halteelement bzw. seine Elemente vor dem Klebeprozeß aufgenommen und zur Scheibe bzw. zueinander ausgerichtet. Dies wird dadurch erreicht, dass die Lehre den Abmessungen des Sensormoduls entspricht. Durch Positionierung der Lehre in den Sensoraufnahme des Halteelements wird ein Ausrichten des Halteelements zur Scheibe sowie eine Ausrichtung von Lehre und Halteelement zueinander erreicht. Dabei wirken die Stifte der Justierlehre mit den Aufnahmen des Halteelements zusammen. Die für die Klebung erforderlichen Anpreßkräfte (Fügekräfte vom Halteelement zur Windschutzscheibe) werden in einer Ausführung über die Aufnahmevorrichtungen des Sensormoduls und der Stifte erreicht. Da jedoch die Achse 102 in einigen Anwendungen unter einem sehr flachen Durchtrittwinkel zur Unterlage (Windschutzscheibe) steht, sind die Anpresskräfte in diesen Ausführungen zwar ausreichend, aber nicht optimal. Daher wird in einer Ausführung die Lehre durch zusätzliche Anpreßstifte erweitert, die die für die Klebung erforderlichen Kräfte direkt an das Halteelement übertragen. Diese Anpreßstifte werden auf einer Halteplatte aufgebaut, die während des Klebevorgangs durch die Fertigungseinrichtungen parallel zur Windschutzscheibe ausgerichtet ist. Die Stifte werden auf einer Linie angeordnet, die dem Umfang des Halteelements, im bevorzugten Ausführungsbeispiel des Trichters der Streulichtblende entspricht, so dass die Anpreßkraft während des Klebevorgangs gleichmäßig verteilt ist. Die Stifte werden an der Kontaktfläche zum Halteelement zentrierend ausgestaltet, wobei im Halteelement dazu komplementär geformte Senken vorgesehen sind. Eine derartige zentrierende Wirkung wird durch eine kegelförmige oder kalottenförmige Gestaltung der Spitze der Anpreßstifte oder eine dazu inversen Kontur erreicht. Die zentrierende Wirkung der einzelnen Stifte unterstützt die Ausrichtung des Halteelements während des Klebeprozesses, vorzugsweise einschließlich des Aushärtens.

Als vorteilhafte Erweiterung werden bewegliche Klammern an der Halteplatte der Stifte vorgesehen, die während des Klebevorgangs um den Rand des Halteelements herumgreifen und den direkten Kontakt des jeweiligen Zentrierstiftes mit dem Halteelement gewährleisten. Dadurch wird vermieden, dass das Halteelement während des Klebevorgangs verkippt oder sich verbiegt und eine präzise Ausrichtung der Achsen somit gestört würde.

Eine weitere Ergänzung besteht in einer zweigeteilten Auslegung des Halteelements. Dabei wird an der Scheibe in einem ersten Schritt nur eine dünn ausgestaltete Ankoppelscheibe geklebt, an die die eigentliche Streulichtblende mit der Aufnahme für die Kameramodule in einem zweiten Arbeitsschritt befestigt wird. Die Lehre für den Klebeprozeß der Ankoppelscheiben sind entsprechend anzupassen.

Figur 2 zeigt einen Schnitt durch das Halteelement entlang der Linie A-A'. Dargestellt sind dabei die Kontaktfläche 110 sowie beispielhaft mit Anpreßstiften in Wirkverbindung tretende Senken 40, die die obige zentrierende Wirkung bereitstellen.

Figur 3 zeigt eine Ansicht des Halteelements von oben, wobei die Kontaktfläche 101, Aufnahmeflächen für die Zentrierstifte 40, eine Aufnahme 20 für das Sensormodul sowie Aufnahmen 30 für die Stifte 51 der Lehre 50 dargestellt sind.

In Figur 4 ist das Halteelement 100 von uriten, d.h. von der Unterlage aus, dargestellt, wobei die Kontaktfläche und Sensoraufnahme 20 hervorgehoben sind.

Die Figuren 5 und 6 zeigen eine Darstellung des Halteelements entlang der Achse 102 aus beiden Richtungen. In Figur 5 ist die Sensoraufnahme 20 dargestellt, während in Figur 6 die Sensoraufnahme mit Aufnahmen für die Stifte 51 der Lehre 50 dargestellt sind.

Die bevorzugten Anwendung ist ein Halteelement für ein Stereokamerasystem in Kraftfahrzeugen, welches an die Windschutzscheibe des Fahrzeugs angebracht ist. Bei anderen Sensormodule, die entsprechend auf Unterlagen unter Einhalten einer genauen Ausrichtungen angebracht werden, wird die geschilderte Vorgehensweise und Elemente mit den entsprechenden Vorteilen ebenfalls angewendet.

## Patentansprüche

1. Vorrichtung zur Befestigung eines Bildsensorsytems an einer Scheibe eines Kraftfahrzeugs, wobei die Vorrichtung folgendes umfasst:
- eine Anpreßplatte (70) mit Zentrierstiften (80), die sich auf einer der Scheibe zugewandten Seite der Anpreßplatte (70) befinden;
- ein Halteelement (10) mit einer Sensoraufnahme (20) zur Aufnahme des Bildsensorsystems und mit einer Kontaktfläche (101) zur Anbringung an der Scheibe;
- wobei am Halteelement (10) Aufnahmen (40) für die Zentrierstifte (80) bei einem Verbindungsvorgang des Halteelements (10) mit der Anpreßplatte (70) ausgebildet sind.

2. Vorrichtung nach Anspruch 1, **dadurch gekennzeichnet, dass** am Halteelement (10) im Bereich der Sensoraufnahme (20) weitere Aufnahmen (30) für Stifte (51) einer den Abmessungen des Bildsensorsystems entsprechenden Justieriehre (50) angeordnet sind.

3. Vorrichtung nach einem der Ansprüche 1 oder 2, **dadurch gekennzeichnet,**
**dass** das Bildsensorsystem Stereokamerasystem für Kraftfahrzeuge ist.

## Claims

1. Device for fastening an image sensor system on a pane of a motor vehicle, the device comprising the following:
- a pressure plate (70) with centring pins (80) which are located on a side of the pressure plate (70) facing the pane; and
- a holding element (10) with a sensor receptacle (20) for receiving the image sensor system and with a contact surface (101) for fitting on the pane;
- there being formed on, the holding element (10) receptacles (40) for the centring pins (80) during an operation which connects the holding element (10) to the pressure plate (70).

2. Device according to Claim 1, **characterized in that** further receptacles (30) for pins (51) of an adjusting gauge (50) which corresponds to the dimensions of the image sensor system are arranged on the holding element (10) in the region of the sensor receptacle (20).

3. Device according to either of Claims 1 and 2, **characterized in that** the image sensor system is a stereo camera system for motor vehicles.

## Revendications

1. Dispositif de fixation d'un système de capteur d'image sur une vitre d'un véhicule automobile, le dispositif comprenant les éléments suivants :
- une plaque de pression (70) avec des goupilles de centrage (80) qui sont situées sur un côté de la plaque de pression (70) tourné vers la vitre ;
- un élément de fixation (10) avec un logement de capteur (20) pour recevoir le système de capteur d'image et avec une surface de contact (101) pour le montage sur la vitre ;
- des logements (40) pour les goupilles de centrage (80) lors d'une opération de connexion de l'élément de fixation (10) à la plaque de pression (70) étant réalisés sur l'élément de fixation (10).

2. Dispositif selon la revendication 1, **caractérisé en ce que** d'autres logements (30) pour des goupilles (51) d'une jauge de réglage (50) correspondant aux dimensions du système de capteur d'image sont disposés sur l'élément de fixation (10) dans la région du logement de capteur (20).

3. Dispositif selon l'une quelconque des revendications 1 ou 2, **caractérisé en ce que** le système de capteur d'image est un système de caméra stéréo pour des véhicules automobiles.
